# EUROPÄISCHE PATENTSCHRIFT

(11) **EP 1 780 507 B1**
(45) Veröffentlichungstag und Bekanntmachung des Hinweises auf die Patenterteilung: **07.04.2010**
(21) Anmeldenummer: 06122554.6
(22) Anmeldetag: 19.10.2006
(51) Int. Cl.: G01C 21/32, G09B 29/10, G08G 1/0969

(54) **Verfahren und Navigationsgerät zur Darstellung realer Bilder mit einer überlagerten digitalen Strassenkarte**
Method and navigation device for displaying real images with an overlaid digital road map
Procédé et dispositif de navigation destinés à la représentation d'images réelles avec une carte routière numérique superposée

(30) Priorität: 25.10.2005 DE 102005051000
(43) Veröffentlichungstag der Anmeldung: 02.05.2007
(73) Patentinhaber: ROBERT BOSCH GMBH, 70442 Stuttgart (DE)
(72) Erfinder: Faenger, Jens, 94304 Palo Alto (DE); Smirnov, Lothar-Frank, 70567 Stuttgart (DE)

(56) Entgegenhaltungen:
- US-A1- 2004 006 425
- US-A1- 2005 052 472

## Beschreibung

Die Erfindung betrifft ein Verfahren zur Darstellung realer Bilder auf einem Display eines Navigationsgeräts, wobei den Bildern Straßenzüge einer digitalen Karte überlagert sind sowie ein entsprechend ausgebildetes Navigationsgerät.

Navigationsgeräte- oder -systeme sind dem Fachmann in verschiedenen Ausführungsformen bekannt und geläufig. Sie umfassen im Wesentlichen eine Positionsbestimmungseinrichtung, die mit Hilfe der von Satelliten ausgesandten GPS- oder zukünftig der Galileo-Signale die Position im Raum in an sich bekannter Weise bestimmt. Ausgehend von dieser Position kann von einer Zielführungseinrichtung eine Route zu dem vom Nutzer eingegebenen Zielpunkt errechnet und entsprechende Richtungsinformationen optisch und/oder akustisch ausgegeben werden. Derartige Navigationsgeräte sind entweder transportabel ausgeführt, um sie beispielsweise im Freien mit sich führen zu können oder sie sind in ein Kraftfahrzeug eingebaut, um zu einem Ziel zu gelangen.

Hierzu ist das Navigationsgerät mit einem Speicher versehen, beispielsweise einer austauschbaren CD-Rom, in dem alle Informationen bezüglich des Strecken- und Wegenetzes abgespeichert sind. Dabei kann eine Fahrtroute in Abhängigkeit vom Nutzer vorgegebener Kriterien wie u.a. dem Ausschluss von Mautstrecken errechnet werden. Zur Ausgabe von Zielführungsinformationen ist es bekannt, dass auf einem Display oder Bildschirm des Navigationsgeräts eine künstlich dargestellte Straßenkarte gegebenenfalls auch dreidimensional beziehungsweise in einer vektoriellen Darstellung wiedergegeben wird. In dieser Darstellung kann eine Fahrtroute zum Ziel auch farblich hervorgehoben sein.

Weiterhin ist es bekannt, dass real aufgenommene Bilder der Fahrzeugumgebung, die in einem eigenen Speicher hinterlegt sind, in zwei- oder dreidimensionaler Form zur Wiedergabe auf dem Display verwendet werden. Hier kann beispielsweise auch ein digitales Höhenmodell mit einbezogen werden. Hierbei sind unter dem Begriff "reale Bilder" sowohl Luftbilder, die aus einem Flugzeug heraus aufgenommen worden sind, als auch Satellitenbilder zu verstehen.

Würden nur die realen Bilder auf dem Display wiedergeben werden, so könnte eine Route zum gewünschten Fahrtziel häufig nicht dargestellt werden. Weiterhin ist es bekannt, dass aus den Bildern, besonders aus großmaßstäblichen Satellitenbildern, Straßen und Wege nicht mehr aufgelöst werden können. Daher ist es bekannt, einem derartigen realen Bild die Straßenzüge einer digitalen Karte zu überlagern, wobei die Maßstäbe und Koordinatensysteme der realen Bilder sowie der digitalen Karte aneinander angepasst sind. Somit kann ein Nutzer vor dem Hintergrund eines Luft- oder Satellitenbildes die digitale Straßenkarte sehen und mit einer hervorgehobenen Route zum Ziel geführt werden.

Als nachteilig hierbei ist anzusehen, dass auf Grund der unterschiedlichen Datenquellen der realen Bilder sowie der digitalen Straßenkarte die überlagerte Darstellung zu Fehlern in der Wiedergabe führen kann. Unter anderem kann es vorkommen, dass eine eingeblendete digitale Straße sich nicht exakt mit in dem realen Bild sichtbaren tatsächlichen Straße deckt, so dass unter Umständen eine Fehlinterpretation durch einen Nutzer des Navigationsgeräts möglich ist.

Die US 2005/052472 A1 offenbart ein Navigationsgerät mit einem Display zur Darstellung gespeicherter realer Bilder sowie gespeicherter digitaler Karten mit Straßenzügen, wobei den realen Bildern die Straßenzüge überlagert werden können und die Straßenzüge durchscheinend darstellbar sind.

Ausgehend von diesem Stand der Technik liegt der Erfindung die Aufgabe zugrunde, ein Verfahren zur Darstellung realer Bilder auf einem Display eines Navigationsgeräts zu schaffen, bei dem ohne sichtbare Fehler eine digitale Karte überlagert werden kann. Des Weiteren soll ein entsprechend ausgebildetes Navigationsgerät angegeben werden.

Diese Aufgaben werden durch die in den Ansprüchen 1 und 4 angegebenen Merkmale gelöst.

Der Kerngedanke der Erfindung besteht darin, dass in an sich bekannter Weise ein reales Bild zweidimensional oder gegebenenfalls dreidimensional auf einem Display oder Bildschirm eines Navigationsgeräts dargestellt wird. Zur Zielführung eines Nutzers wird diesem realen Bild eine digitale Karte mit den Straßenzügen überlagert,
wobei eine Fahrtroute zum Beispiel auch farblich hervorgehoben werden kann. Zur Vermeidung der auf Grund von Datenungenauigkeiten auftretenden Darstellungsfehlern bei dieser Überlagerung wird das Straßennetz beziehungsweise die digitalen Straßenzüge durchscheinend dargestellt. Das bedeutet, dass diese Straßenzüge zumindest teilweise transparent sind, um quasi durch diese Straßenzüge hindurch das im Hintergrund der Darstellung angeordnete reale Bild weiterhin einsehen zu können. Es versteht sich, dass das Navigationssystem beziehungsweise dessen Steuereinrichtung entsprechend hard- und/oder softwaremäßig ausgelegt ist, um bei der Überlagerung der digitalen Straßenzüge diese entsprechend transparent oder durchscheinend darzustellen. Prinzipiell kann hierfür auch eine vektorielle Darstellung auf dem Display gewählt werden. Das Navigationsgerät ist entweder transportabel ausgeführt oder beispielsweise in ein Kraftfahrzeug eingebaut.

Weiterhin ist in den Ansprüchen 1 und 4 gekennzeichnet, dass für die Darstellung der digitalen Karte, die dem realen Bild überlagert wird, eine variable Transparenz gewählt werden kann. Das bedeutet, dass über eine Breite eines zu überlagernden digitalen Straßenzugs sich dessen Transparenz ändert. Vorzugweise wird nur der innere oder mittlere Bereich eines Straßenzugs praktisch undurchsichtig dargestellt, um ihn vollständig erkennen zu können. Zu den seitlichen Rändern der digitalen Straße hin, in Fahrtrichtung auf dieser Straße gesehen, erhöht sich die Transparenz um hier durch einen stufenlosen Übergang zwischen dem digitalen Straßennetz und dem Luftbild im Randbereich des digitalen Straßennetzes zu erreichen. Gegebenenfalls kann hier auch eine Farbe beispielsweise der zum Ziel führenden Fahrtroute mit einem vom Fachmann wählbaren Gradienten zum Rand hin verändert werden, um einen sanften Übergang zum realen Bild zu erhalten.

Der Vorteil der Erfindung besteht darin, dass durch die gewählte Art der Darstellung beispielsweise eine reale Straße, die aus dem Luftbild ersichtlich ist, zumindest teilweise durch die überlagerte digital wiedergegebene Straße oder Fahrtroute zum Ziel hindurch sichtbar ist und dementsprechend eine eindeutige Zuordnung der realen Straße zu der digital dargestellten erfolgen kann. Sollte aufgrund von Datenungenauigkeiten die digitale Straße zu dem realen Bild geringfügig versetzt sein so erscheint die Straße lediglich etwas breiter. Somit sind Irritationen eines Fahrers eines Kraftfahrzeugs, der mit Hilfe des Navigationsgeräts zu einem Zielpunkt gelangen möchte, vermieden und dementsprechend die Verkehrssicherheit ist erhöht. Das Verfahren lässt sich ohne großen Aufwand in einem vorhandenen Navigationsgerät hard- und/oder softwaremäßig implementieren, so dass bei der Herstellung praktisch kein zusätzlicher Aufwand anfällt.

Vorteilhafte Ausgestaltungen der Erfindung sind jeweils in den Unteransprüchen gekennzeichnet.

Zur weiteren Verbesserung der Darstellung ist in den Ansprüchen 2 und 5 vorgeschlagen, dass in Abhängigkeit eines vom Nutzer des Navigationsgeräts gewählten Abbildungsmaßstabs der Darstellung auf dem Display die Transparenz der dargestellten Straßenzüge verändert werden kann. Wählt ein Nutzer ein Luft- oder Satellitenbild mit einem großen Maßstab, so kann er dieser Abbildung die tatsächlichen Straßenverläufe praktisch nicht mehr entnehmen, da sie für eine Wiedergabe auf einem Display zu klein sind. In einem solchen Fall wird die digitale Straßenkarte dem realen Bild überlagert und eine sehr geringe Transparenz gewählt, um einen Straßenverlauf wiederzugeben. Etwaige Darstellungsfehler fallen hier kaum ins Gewicht, da der Nutzer den realen Verlauf sowieso nicht sehen kann. Prinzipiell kann hierbei auch eine Transparenz von Null gewählt werden, das heißt die digitale Straßenkarte wird dem realen Bild praktisch vollständig überlagert. Wird vom Fahrer hingegen ein sehr kleiner Abbildungsmaßstab gewählt, um beispielsweise eine Innenstadt durchfahren zu können, so kann er aus einer entsprechenden Aufnahme beispielsweise eine Luftaufnahme, den tatsächlichen Straßenverlauf unmittelbar erkennen. Somit ist die Wiedergabe eines digitalen Straßenetzes nicht mehr notwendig und eine sehr hohe Transparenz beziehungsweise ein vollständiges Ausblenden der digitalen Karte kann gewählt werden. Wird ein Maßstab zwischen diesen beiden Extremen verwendet kann das digitale Straßennetz halbdurchlässig dargestellt werden.

Es versteht sich, dass hierfür an dem Navigationsgerät eine Eingabeeinrichtung zur Auswahl eines Abbildungsmaßstabs durch den Nutzer vorgesehen ist. Dies kann beispielsweise mit einem stufenlos einstellbaren Stellrad oder über eine menügeführte Steuerung auf dem Bildschirm des Navigationsgeräts erfolgen.

In den Ansprüchen 3 und 6 ist angegeben, dass in gleicher Weise wie das digitale Straßennetz auch weitere Informationen wie Städtenamen, Angaben über Aussichts- oder Servicepunkte, Höhenangaben oder dergleichen mit einer vorzugsweise veränderbaren Transparenz dem realen Bild überlagert werden können, um den Informationsgehalt der Darstellung zu erhöhen.

Eine Ausführungsform der Erfindung wird nachstehend an Hand der Zeichnungen näher erläutert. Es zeigen:
- Figur 1:: ein Blockschaltbild eines Navigationsgeräts,
- Figur 2:: verschiedene Darstellungen mit unterschiedlichen Maßstäben, und
- Figur 3:: eine Abbildung mit variabler Transparenz.

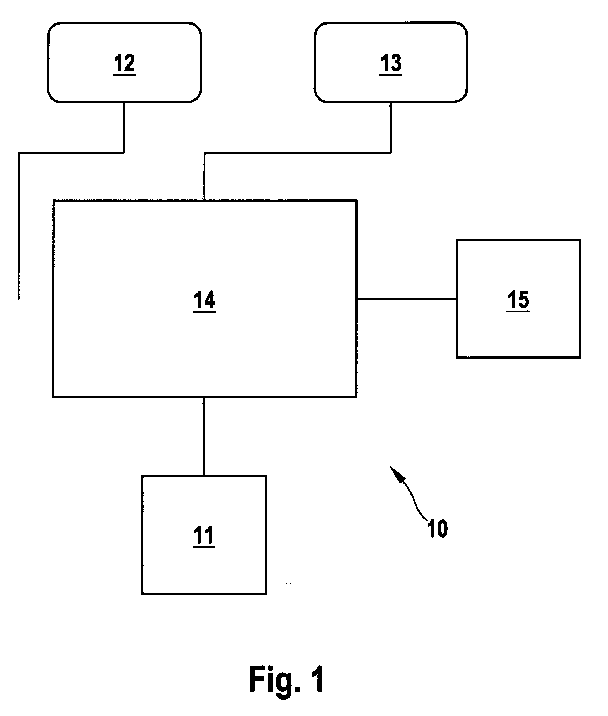

Aus der schematischen Darstellung in Figur 1 ist ein Navigationsgerät 10 ersichtlich, das über eine an sich bekannte Positionsbestimmungseinrichtung 11 verfügt. Weiterhin sind zwei Speicher 12, 13 vorgesehen, um im Speicher 12 eine digitale Straßenkarte und im Speicher 13 die entsprechenden realen Satelliten- und/oder Luftbilder zu hinterlegen.

Weiterhin ist die Positionsbestimmungseinrichtung 11 derart ausgelegt, dass sie ausgehend von der ermittelten Position eine Fahrtroute zu einem vom Nutzer des Navigationsgeräts 10 vorgegebenen Zielpunkt ermitteln und entsprechende optische und/oder akustische Routeninformationen an den Nutzer ausgeben kann.

Dies erfolgt beispielsweise dadurch, dass auf einem Display 14 oder einem Bildschirm reale Bilder der Umgebung in zwei- oder dreidimensionaler Weise wiedergegeben werden, gegebenenfalls kann dieses vektoriell erfolgen.

Hierzu kann von dem Nutzer des Navigationsgeräts 10 der Maßstab der Abbildung auf dem Display 14 mit Hilfe einer entsprechend ausgebildeten Eingabeeinrichtung 15 gewählt werden. Dies kann beispielsweise mit Hilfe eines Stellrads oder über eine menügeführte Bildschirmsteuerung erfolgen.

Auf dem Display 14 wird entsprechend dem vom Nutzer gewählten Maßstab die dem realen Bild überlagerte digitale Karte mit unterschiedlichen Transparenzen, das heißt mehr oder weniger stark durchscheinend oder durchsichtig, dargestellt. Wird ein großer Maßstab zur Erfassung eines Überblicks der gesamten Region gewählt so kann eine geringe oder eine gegen Null gehende Transparenz der digitalen Karte gewählt werden, da bei einem solch großen Maßstab die tatsächlichen Straßen beispielsweise auf einem Satellitenbild sowieso nicht zu erkennen sind. Wird hingegen ein sehr kleiner Maßstab gewählt, um beispielsweise eine Innenstadt zu durchfahren, so sind aus einem entsprechenden Luftbild bereits sämtliche Straßenzüge entnehmbar und die Transparenz der überlagerten digitalen Karte kann gegen den Wert Eins gehen, das heißt zur vollständigen Durchsichtigkeit. Zwischen diesen beiden Werten kann in Abhängigkeit des gewählten Maßstabs ein Zwischenwert der Transparenz gewählt werden, um derart einen sanften Übergang von den digital dargestellten Straßenzügen zu dem Hintergrund des realen Bildes zu erhalten, um hierdurch eventuell vorhandene Darstellungsfehler zu unterdrücken.

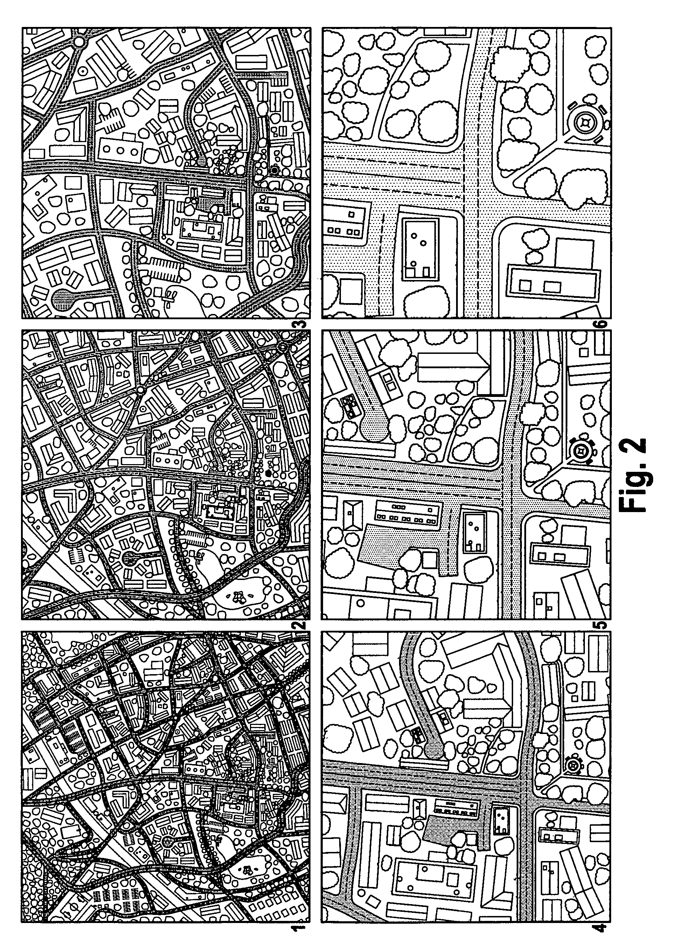

Eine entsprechende Darstellung mit verschiedenen Maßstäben ist der Figur 2 entnehmbar, wobei die digitale Karte mit abnehmenden Maßstab von Bild 1 bis Bild 6 immer durchsichtiger dargestellt wird. Diese Zunahme der Durchsichtigkeit ist durch die von Bild 1 bis Bild 6 zunehmende Helligkeit der Schraffur der digital erzeugten Straßenzüge verdeutlicht, die einem realen Luftbild oder einer Satellitenaufnahme überlagert sind.

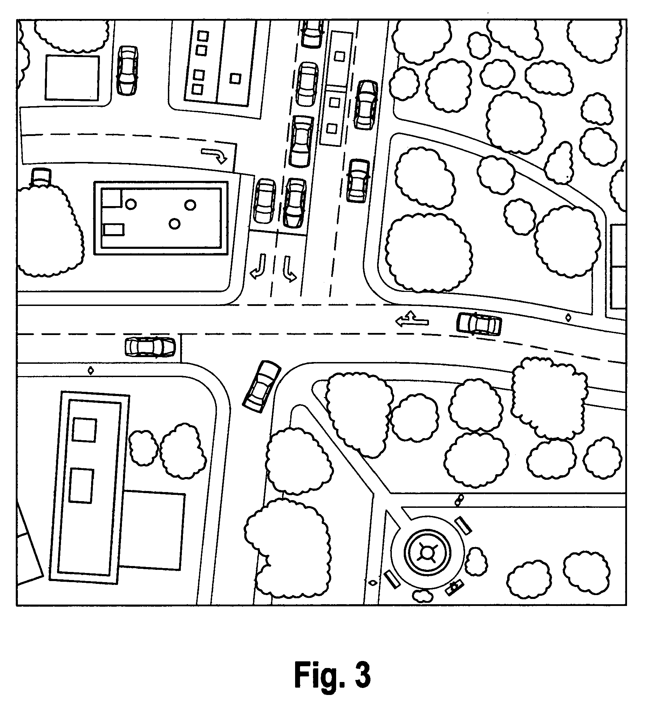

Weiterhin ist es möglich, zur Verbesserung der Darstellung wie aus Figur 3 ersichtlich, Ungenauigkeiten bei der Überlagerung der digitalen Karte auf ein reales Bild dadurch zu unterdrücken, dass, im Querschnitt eines Straßenverlaufs gesehen, dieser zum Rand hin immer durchsichtiger dargestellt wird, so dass das digitale Straßennetz über die gesamte Fläche der Darstellung jeweils nicht mehr einen konstanten Grad der Transparenz hat.

Es versteht sich, dass auch weitere Informationen oder Hinweise auf dem Display 14 mit variabler Transparenz dargestellt werden können, um eine möglichst informative Wiedergabe zu erhalten.

## Patentansprüche

1. Verfahren zur Darstellung aufgenommener Bilder realer Szenen auf einem Display (14) eines Navigationsgeräts (10), wobei den Bildern Straßenzüge einer digitalen Karte überlagert werden, wobei die digitalen Straßenzüge durchscheinend dargestellt werden, **dadurch gekennzeichnet, dass** über eine Breite des jeweils dargestellten Straßenzugs gesehen dieser mit verschiedenen Transparenzen dargestellt wird.

2. Verfahren nach Anspruch 1, **dadurch gekennzeichnet, dass** eine Transparenz der dargestellten Straßenzüge mit dem Abbildungsmaßstab verändert wird.

3. Verfahren nach einem der Ansprüche 1 oder 2, **dadurch gekennzeichnet, dass** weitere Informationen durchscheinend dem realen Bild überlagert werden.

4. Navigationsgerät (10) mit einem Speicher (13) für aufgenommene Bilder realer Szenen und mit einer in einem Speicher (12) hinterlegten digitalen Karte, wobei die realen Bilder mit der überlagerten Karte auf einem Display (14) darstellbar sind, wobei die digitalen Straßenzüge durchscheinend darstellbar sind **dadurch gekennzeichnet, dass** über eine Breite des jeweils dargestellten Straßenzugs gesehen dieser mit verschiedenen Transparenzen darstellbar ist.

5. Navigationsgerät nach Anspruch 4, **dadurch gekennzeichnet, dass** eine Transparenz der dargestellten Straßenzüge mit dem Abbildungsmaßstab veränderbar ist, wobei der Abbildungsmaßstab über eine Eingabeeinrichtung (15) vorgebbar ist.

6. Navigationsgerät nach einem der Ansprüche 4 oder 5, **dadurch gekennzeichnet, dass** weitere Informationen durchscheinend darstellbar sind.

## Claims

1. Method for showing recorded images of real scenes on a display (14) of a navigation appliance (10), wherein the images are overlaid with streets from a digital map, said digital streets being shown transparently, **characterized in that**, viewed over a width of the respective street shown, said street is shown with different degrees of transparency.

2. Method according to Claim 1, **characterized in that** a degree of transparency for the streets shown is altered with the scale of depiction.

3. Method according to one of Claims 1 and 2,
**characterized in that** further information is overlaid on the real image transparently.

4. Navigation appliance (10) having a memory (13) for recorded images of real scenes and having a digital map which is stored in a memory (12), wherein the real images can be shown with the overlaid map on a display (14), the digital streets being able to be shown transparently, **characterized in that**, viewed over a width of the respective street shown, said street can be shown with different degrees of transparency.

5. Navigation appliance according to Claim 4, **characterized in that** a degree of transparency for the streets shown can be altered with the scale of depiction, said scale of depiction being able to be prescribed using an input device (15).

6. Navigation appliance according to one of Claims 4 and 5, **characterized in that** further information can be shown transparently.

## Revendications

1. Procédé pour représenter des images enregistrées de scènes réelles sur l'écran (14) d'un appareil de navigation (10), dans lequel des tronçons de chaussée d'une carte numérique sont superposés aux images et les tronçons numériques de chaussée sont représentés en transparence,
**caractérisé en ce que**
le tronçon de chaussée est représenté à différentes transparences sur la largeur du tronçon de chaussée représenté.

2. Procédé selon la revendication 1, **caractérisé en ce que** la transparence du tronçon de chaussée représenté change avec l'échelle de représentation.

3. Procédé selon l'une des revendications 1 ou 2, **caractérisé en ce que** d'autres informations sont superposées en transparence sur l'image réelle.

4. Appareil de navigation (10) doté d'une mémoire (13) à images enregistrées de scènes réelles et d'une carte numérique conservée dans une mémoire (12), les images réelles pouvant être représentées sur un écran (14) en y étant superposées à la carte, les tronçons numériques de chaussée étant représentés en transparence,
**caractérisé en ce que**
le tronçon de chaussée peut être représenté en différentes transparences sur la largeur du tronçon de chaussée représenté.

5. Appareil de navigation selon la revendication 4, **caractérisé en ce que** la transparence des tronçons de chaussée représentés peut être modifiée avec l'échelle de représentation, l'échelle de représentation pouvant être prédéterminée par un dispositif d'introduction (15).

6. Appareil de navigation selon l'une des revendications 4 ou 5, **caractérisé en ce que** d'autres informations peuvent y être représentées en transparence.
